(19) Europäisches Patentamt
European Patent Office
Office européen des brevets

(11) EP 1 874 096 A1

(12) EUROPÄISCHE PATENTANMELDUNG

(43) Veröffentlichungstag:
02.01.2008 Patentblatt 2008/01

(51) Int Cl.:
*H05B 33/08* (2006.01)

(21) Anmeldenummer: 06013620.7

(22) Anmeldetag: 29.06.2006

(84) Benannte Vertragsstaaten:
AT BE BG CH CY CZ DE DK EE ES FI FR GB GR HU IE IS IT LI LT LU LV MC NL PL PT RO SE SI SK TR
Benannte Erstreckungsstaaten:
AL BA HR MK YU

(71) Anmelder: Patent-Treuhand-Gesellschaft für elektrische
Glühlampen mbH
81543 München (DE)

(72) Erfinder:
• Busse, Olaf
80686 München (DE)
• Siegmund, Thomas Dr.
83624 Otterfing (DE)

(74) Vertreter: Raiser, Franz
Osram GmbH
Postfach 22 16 34
80506 München (DE)

(54) Schaltungsvorrichtung zum Betreiben mindestens einer LED und Verfahren zum Betreiben einer derartigen Schaltungsvorrichtung

(57) Die vorliegende Erfindung betrifft eine Schaltungsvorrichtung zum Betreiben mindestens einer LED (LED1, LED2, LED3) mit einem Eingangsanschluss (E1, E2) zum Anschließen einer Eingangsspannung ($U_{in}$); einem Ausgangsanschluss (A1, A2) zum Bereitstellen einer Ausgangsspannung ($U_{out}$) an die mindestens eine LED (LED1, LED2, LED3); einem zwischen den Eingangsanschluss (E1, E2) und den Ausgangsanschluss (A1, A2) gekoppelten . Spannungswandler, der eine Wandlerinduktivität (L1) und einen Wandlerschalter (S1) umfasst; einer Steuervorrichtung (10) zum abwechselnden Einschalten für eine Einschaltzeit ($t_{on}$) und Ausschalten für eine Ausschaltzeit ($t_{off}$) des Wandlerschalters (S1); eine Regelvorrichtung (10) zur Regelung eines am Ausgangsanschluss (A1, A2) an die mindestens eine LED (LED1, LED2, LED3) bereitgestellten mindestens einen Ausgangsparameters; wobei sie weiterhin umfasst: einen Mikroprozessor (10), der zumindest aus den Parametern Eingangsspannung ($U_{in}$), Ausgangsspannung ($U_{out}$), Wandlerinduktivität (L1), Einschaltzeit ($t_{on}$) und Ausschaltzeit ($t_{off}$) den mindestens einen Ausgangsparameter berechnet und an die Regelvorrichtung (10) bereitstellt. Die Erfindung betrifft überdies ein Verfahren zum Betreiben einer derartigen Schaltungsvorrichtung.

Printed by Jouve, 75001 PARIS (FR)

**Beschreibung**

**Technisches Gebiet**

Die vorliegende Erfindung betrifft eine Schaltungsvorrichtung zum Betreiben mindestens einer LED mit einem Eingangsanschluss zum Anschließen einer Eingangsspannung, einem Ausgangsanschluss zum Bereitstellen einer Ausgangsspannung an die mindestens eine LED, einem zwischen den Eingangsanschluss und den Ausgangsanschluss gekoppelten Spannungswandler, der eine Wandlerinduktivität und einen Wandlerschalter umfasst, einer Steuervorrichtung zum abwechselnden Einschalten für eine Einschaltzeit und Ausschalten für eine Ausschaltzeit des Wandlerschalters, und eine Regelvorrichtung zur Regelung eines am Ausgangsanschluss an die mindestens eine LED bereitgestellten mindestens einen Ausgangsparameters. Sie betrifft überdies ein Verfahren zum Betreiben einer derartigen Schaltungsvorrichtung.

**Stand der Technik**

Die der vorliegenden Erfindung zugrunde liegende Problematik wird nachfolgend am Beispiel der Bereitstellung eines geregelten Ausgangsstroms an so genannte High-Brightness-LEDs (HB-LED) dargestellt. Die erfindungsgemäße Schaltungsvorrichtung bzw. das erfindungsgemäße Verfahren lässt sich jedoch ohne Einschränkung zur Bereitstellung auch anderer Ausgangsparameter zum Betreiben von LEDs ganz allgemein unter Erzielung der erfindungsgemäßen Vorteile einsetzen.

HB-LEDs müssen für einen optimalen Betrieb mit konstantem Strom betrieben werden. Handelsübliche LED-Treiberschaltungen, beispielsweise Steuer-ICs für Spannungswandler, verwenden dafür einen niederohmigen Shunt-Widerstand zur LED-Stromerfassung, um diesen dann auf einen konstanten Wert zu regeln. Aus dem für die Stromregelschaltung notwendigen Spannungsabfall, der aus Gründen der Störsicherheit bei handelsüblichen ICs mindestens 500 mV betragen sollte, lässt sich der Wert des Shunt-Widerstands $R_{Shunt}$ wie folgt berechnen: $R_{Shunt} = U_{Spannungsabfall} / I_{LED}$. Die dabei im Shunt-Widerstand entstehenden Verluste berechnen sich zu $Pv = R_{Shunt} * I_{LED} * I_{LED}$, steigen also mit dem Strom quadratisch an. Beispielsweise ergeben sich dadurch bei Betrieb einer einzelnen HB-LED mit einem Betriebsstrom von 1 A Verluste von ca. 0,5 W. Diese Verluste begrenzen die maximal mögliche LED-Leistung in der jeweiligen Applikation.

**Darstellung der Erfindung**

Die Aufgabe der vorliegenden Erfindung besteht deshalb darin, den Wirkungsgrad einer gattungsgemäßen Schaltungsvorrichtung zu verbessern. Sie besteht überdies darin, ein entsprechendes Verfahren zum Betreiben einer derartigen Schaltungsvorrichtung mit verbessertem Wirkungsgrad bereitzustellen.

Die erstgenannte Aufgabe wird gelöst durch eine Schaltungsvorrichtung mit den Merkmalen von Patentanspruch 1, die zweitgenannte Aufgabe durch ein Verfahren mit den Merkmalen von Patentanspruch 11.

Die vorliegende Erfindung basiert zunächst auf der Erkenntnis, dass eine Verbesserung des Wirkungsgrads erreicht werden kann, wenn eine Möglichkeit gefunden wird, die eine Stromregelung ermöglicht, bei der jedoch ein Shunt-Widerstand entfallen kann. Die vorliegende Erfindung basiert weiterhin auf der Erkenntnis, dass dies ermöglicht wird, wenn ein Mikroprozessor verwendet wird, der zumindest aus den Parametern Eingangsspannung, Ausgangsspannung, Wandlerinduktivität, Einschaltzeit und Ausschaltzeit den mindestens einen zu regelnden Ausgangsparameter berechnet und an die Regelvorrichtung bereitstellt.

Wie für den Fachmann offensichtlich, lässt sich die vorliegende Erfindung nicht nur für die Regelung des an die mindestens eine LED bereitgestellten Ausgangsstroms einsetzen, sondern überdies für die Regelung der Ausgangsspannung, der Ausgangsleistung oder von Kombinationen von mindestens zwei der drei Parameter Ausgangsstrom, Ausgangsspannung und Ausgangsleistung.

Um zum eingangs genannten Beispiel zurückzukehren, kann demnach auf der Basis einer erfindungsgemäßen Schaltungsvorrichtung die Verwendung eines Shunt-Widerstands, der im Stand der Technik für die LED-Stromerfassung nötig war, entfallen. Die erfindungsgemäße Schaltungsvorrichtung zeichnet sich durch einen besseren Wirkungsgrad aus, insbesondere bei niedriger Ausgangsspannung. Sie zeigt ein verbessertes thermisches Verhalten, da keine verlustbehafteten Shunt-Widerstände verwendet werden müssen. Dies resultiert darin, dass im Vergleich zum Stand der Technik eine erfindungsgemäße Schaltungsvorrichtung bei kleineren Abmessungen und damit kostengünstiger realisiert werden kann.

Eine bevorzugte Ausführungsform zeichnet sich dadurch aus, dass die Regelvorrichtung zum Regeln des mindestens einen Ausgangsparameters mit der Steuervorrichtung gekoppelt ist, wobei die Steuervorrichtung ausgelegt ist, zum Regeln des mindestens einen Ausgangsparameters die Einschaltzeit und/oder die Ausschaltzeit zu variieren.

Eine weitere bevorzugte Ausführungsform zeichnet sich dadurch aus, dass sie eine Anordnung zum Bestimmen der Eingangsspannung und/oder eine Anordnung zum Bestimmen der Ausgangsspannung umfasst.

Bei einer besonders bevorzugten Ausführungsform ist der Wandler als Hochsetzsteller ausgebildet und der Ausgangsstrom wird berechnet zu:

$$I_{out} = (t_{on} * U_{in})^2 / (2 * L * (U_{out} - U_{in}) * (t_{on} + t_{off})).$$

Ohne eine Vorrichtung zur Detektion des Nullwerdens des Stroms, um ein Arbeiten nahe der Lückgrenze zu ermöglichen, kann die kleinste mögliche off-Zeit $t_{off}$ berechnet werden zu:

$$t_{off} = (t_{on} * U_{in}) / (U_{out} - U_{in}).$$

Weitere vorteilhafte Ausführungsformen ergeben sich aus den Unteransprüchen.

Die mit Bezug auf die erfindungsgemäße Vorrichtung vorgestellten bevorzugten Ausführungsformen und deren Vorteile gelten, sofern anwendbar, in entsprechender Weise für das erfindungsgemäße Verfahren.

**Kurze Beschreibung der Zeichnung(en)**

Im Nachfolgenden wird nunmehr ein Ausführungsbeispiel einer erfindungsgemäßen Schaltungsvorrichtung unter Bezugnahme auf die beigefügte Zeichnung näher dargestellt. Diese zeigt in schematischer Darstellung ein Schaltbild einer erfindungsgemäßen Schaltungsvorrichtung.

**Bevorzugte Ausführung der Erfindung**

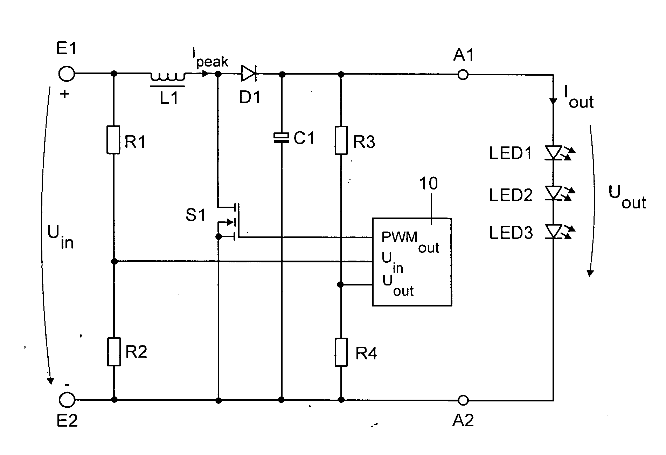

Fig. 1 zeigt als Beispiel für eine erfindungsgemäße Schaltungsvorrichtung einen Aufwärtswandler. Wie für den Fachmann offensichtlich, kann das erfindungsgemäße Prinzip ohne weiteres auf andere Wandlerarten, beispielsweise Abwärtswandler, übertragen und mit Erfolg angewendet werden.

Am Eingangsanschluss E1, E2 des in Fig. 1 dargestellten Aufwärtswandlers liegt eine Eingangsspannung $U_{in}$ an. Am Ausgangsanschluss A1, A2 wird eine Ausgangsspannung $U_{out}$ an eine Serienschaltung von drei HB-LEDs LED1, LED2, LED3 bereitgestellt. Als Aufwärtswandler dient ein Hochsetzsteller, der eine Hochsetzstellerinduktivität L1, einen Hochsetzstellerschalter S1, eine Hochsetzstellerdiode D1 sowie einen Speicherkondensator C1 umfasst. Ein Mikroprozessor 10 umfasst eine Steuervorrichtung zum abwechselnden Einschalten für eine Einschaltzeit $t_{on}$ und Ausschalten für eine Ausschaltzeit $t_{off}$ des Hochsetzstellerschalters S1 über seinen Ausgang PWMout. Er umfasst überdies eine Regelvorrichtung zur Regelung des durch die Serienschaltung der drei LEDs LED1, LED2, LED3 fließenden Stroms $I_{out}$. Über seinen Eingang Uin und seinen Eingang Uout ist der Mikroprozessor 10 ausgelegt, die Eingangsspannung $U_{in}$ unter Verwendung zweier ohmscher Widerstände R1, R2 und die Ausgangsspannung $U_{out}$ unter Verwendung zweier ohmscher Widerstände R3, R4 zu bestimmen.

Im Mikroprozessor 10 ist überdies der Wert der Drossel L1 abgelegt. Daraus wird im Mikroprozessor 10 zunächst der maximale Drosselstrom $I_{peak}$ berechnet zu:

$$I_{peak} = t_{on} * U_{in} / L1.$$

Damit lässt sich verhindern, dass die Hochsetzstellerinduktivität L1 in Sättigung betrieben wird oder der Hochsetzstellerschalter S1 überlastet wird.. Weiter lassen sich daraus die Ausgangsleistung $P_{out}$ und der Ausgangsstrom $I_{out}$ im Mikroprozessor 10 wie folgt berechnen:

$$P_{out} = \frac{I_{peak}^{\,2} \bullet U_{out} \bullet L1}{2 \bullet (U_{out} - U_{in}) \bullet (t_{on} + t_{off})}$$

und

$$I_{out} = {P_{out}}\big/{U_{out}} = \frac{t_{on}{}^2 \bullet U_{in}{}^2}{2L \bullet (U_{out} - U_{in}) \bullet (t_{on} + t_{off})}$$

In der letztgenannten Gleichung sind dem Mikroprozessor 10 alle Variablen bekannt, so dass der Ausgangsstrom $I_{out}$ berechnet werden kann, ohne dass hierfür ein Shunt-Widerstand verwendet werden müsste.

Die oben genannten Formeln gelten sowohl für den lückenden Betrieb als auch für den Betrieb an der Lückgrenze. Vorhandene Verluste lassen sich entweder durch detailliertere Formeln berechnen oder durch Korrekturfaktoren berücksichtigen.

Sofern keine Möglichkeit vorgesehen ist, das Nullwerden des Stroms zu detektieren, um nahe an der Lückgrenze zu arbeiten, kann die kleinste mögliche off-Zeit wie folgt berechnet werden:

$$t_{off} = \frac{I_{peak} \bullet L1}{U_{out} - U_{in}} = \frac{t_{on} \bullet U_{in}}{U_{out} - U_{in}}$$

**Patentansprüche**

1. Schaltungsvorrichtung zum Betreiben mindestens einer LED (LED1, LED2, LED3) mit

   - einem Eingangsanschluss (E1, E2) zum Anschließen einer Eingangsspannung ($U_{in}$);
   - einem Ausgangsanschluss (A1, A2) zum Bereitstellen einer Ausgangsspannung ($U_{out}$) an die mindestens eine LED (LED1, LED2, LED3);
   - einem zwischen den Eingangsanschluss (E1, E2) und den Ausgangsanschluss (A1, A2) gekoppelten Spannungswandler, der eine Wandlerinduktivität (L1) und einen Wandlerschalter (S1) umfasst;
   - einer Steuervorrichtung (10) zum abwechselnden Einschalten für eine Einschaltzeit ($t_{on}$) und Ausschalten für eine Ausschaltzeit ($t_{off}$) des Wandlerschalters (S1);
   - eine Regelvorrichtung (10) zur Regelung eines am Ausgangsanschluss (A1, A2) an die mindestens eine LED (LED1, LED2, LED3) bereitgestellten mindestens einen Ausgangsparameters;

   **dadurch gekennzeichnet,**
   **dass** sie weiterhin umfasst:

   - einen Mikroprozessor (10), der zumindest aus den Parametern Eingangsspannung ($U_{in}$), Ausgangsspannung ($U_{out}$), Wandlerinduktivität (L1), Einschaltzeit ($t_{on}$) und Ausschaltzeit ($t_{off}$) den mindestens einen Ausgangsparameter berechnet und an die Regelvorrichtung (10) bereitstellt.

2. Schaltungsvorrichtung nach Anspruch 1,
   **dadurch gekennzeichnet,**
   **dass** die Regelvorrichtung (10) zum Regeln des mindestens einen Ausgangsparameters mit der Steuervorrichtung (10) gekoppelt ist, wobei die Steuervorrichtung (10) ausgelegt ist, zum Regeln des mindestens einen Ausgangsparameters die Einschaltzeit ($t_{on}$) und/oder die Ausschaltzeit ($t_{off}$) zu variieren.

3. Schaltungsvorrichtung nach einem der Ansprüche 1 oder 2,
   **dadurch gekennzeichnet,**
   **dass** sie weiterhin umfasst:

   - eine Anordnung (R1, R2, 10) zum Bestimmen der Eingangsspannung ($U_{in}$).

**4.** Schaltungsvorrichtung nach einem der vorhergehenden Ansprüche,
**dadurch gekennzeichnet,**
**dass** sie weiterhin umfasst:

- eine Anordnung (R3, R4, 10) zum Bestimmen der Ausgangsspannung ($U_{out}$).

**5.** Schaltungsvorrichtung nach einem der vorhergehenden Ansprüche,
**dadurch gekennzeichnet,**
**dass** der mindestens eine Ausgangsparameter die Ausgangsspannung ($U_{out}$) ist.

**6.** Schaltungsvorrichtung nach einem der vorhergehenden Ansprüche,
**dadurch gekennzeichnet,**
**dass** der mindestens eine Ausgangsparameter die Ausgangsleistung ($P_{out}$) ist.

**7.** Schaltungsvorrichtung nach einem der vorhergehenden Ansprüche,
**dadurch gekennzeichnet,**
**dass** der mindestens eine Ausgangsparameter der Ausgangsstrom ($I_{out}$) ist.

**8.** Schaltungsvorrichtung nach Anspruch 7,
**dadurch gekennzeichnet,**
**dass** der Wandler als Hochsetzsteller ausgebildet ist und der Ausgangsstrom ($I_{out}$) berechnet wird zu:

$$I_{out} = (t_{on} * U_{in})^2 / (2 * L1 * (U_{out} - U_{in}) * (t_{on} + t_{off}))$$

**9.** Schaltungsvorrichtung nach Anspruch 8,
**dadurch gekennzeichnet,**
**dass** die Ausschaltzeit ($t_{off}$) berechnet wird zu:

$$t_{off} = (t_{on} * U_{in}) / (U_{out} - U_{in})$$

**10.** Schaltungsvorrichtung nach einem der vorhergehenden Ansprüche,
**dadurch gekennzeichnet,**
**dass** der Ausgangsparameter eine Kombination von mindestens zwei der Parameter Ausgangsstrom ($I_{out}$), Ausgangsspannung ($U_{out}$) und Ausgangsleistung ($P_{out}$) darstellt.

**11.** Verfahren zum Betreiben einer Schaltungsvorrichtung zum Betreiben mindestens einer LED (LED1, LED2, LED3) mit einem Anschluss zum Anschließen einer Eingangsspannung ($U_{in}$), einem Anschluss zum Bereitstellen einer Ausgangsspannung ($U_{out}$) an die mindestens eine LED (LED1, LED2, LED3), einem zwischen den Eingangsanschluss (E1, E2) und den Ausgangsanschluss (A1, A2) gekoppelten Spannungswandler, der eine Wandlerinduktivität (L1) und einen Wandlerschalter (S1) umfasst, einer Steuervorrichtung (10) zum abwechselnden Einschalten über eine Einschaltzeit ($t_{on}$) und Ausschalten über eine Ausschaltzeit ($t_{off}$) des Wandlerschalters (S1), eine Regelvorrichtung (10) zur Regelung des am Ausgangsanschluss (A1, A2) an die mindestens eine LED (LED1, LED2, LED3) bereitgestellten mindestens einen Ausgangsparameters;
**dadurch gekennzeichnet,**
**dass** sie einen Mikroprozessor (10) umfasst, wobei im Mikroprozessor (10) aus der Eingangsspannung ($U_{in}$), der Ausgangsspannung ($U_{out}$), der Wandlerinduktivität (L1), der Einschaltzeit ($t_{on}$) und der Ausschaltzeit ($t_{off}$) der mindestens eine Ausgangsparameter berechnet und an die Regelvorrichtung (10) bereitgestellt wird.

**Europäisches Patentamt**

# EUROPÄISCHER RECHERCHENBERICHT

Nummer der Anmeldung

EP 06 01 3620

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 888 383 B1 (FAIRBANKS JOHN PATRICK [US]) 3. Mai 2005 (2005-05-03) <br> * Spalte 1, Zeile 55 - Spalte 5, Zeile 40; Abbildungen 1,2 * <br> ----- | 1-7,10, 11 | INV. <br> H05B33/08 |
| A | DE 103 30 135 A1 (LUMILEDS LIGHTING U S [US]) 22. Januar 2004 (2004-01-22) <br> * Absatz [0012] - Absatz [0029]; Abbildungen 1,2 * <br> ----- | 1-11 | |
| A | WO 2005/039251 A (VICIOUS POWER PTY LTD [AU]; BASTIANS DAVID [AU]) 28. April 2005 (2005-04-28) <br> ----- | | |
| A | US 2005/231133 A1 (LYS IHOR A [US]) 20. Oktober 2005 (2005-10-20) <br> ----- | | |
| A | US 2005/189822 A1 (NAMBA TAKANORI [JP] ET AL) 1. September 2005 (2005-09-01) <br> ----- | | |

RECHERCHIERTE SACHGEBIETE (IPC)

H05B

Der vorliegende Recherchenbericht wurde für alle Patentansprüche erstellt

| Recherchenort | Abschlußdatum der Recherche | Prüfer |
|---|---|---|
| Den Haag | 21. Dezember 2006 | Albertsson, Gustav |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 01 3620

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-12-2006

| Im Recherchenbericht angeführtes Patentdokument | Datum der Veröffentlichung | Mitglied(er) der Patentfamilie | Datum der Veröffentlichung |
|---|---|---|---|
| US 6888383 B1 | 03-05-2005 | KEINE | |
| DE 10330135 A1 | 22-01-2004 | JP 2004048011 A<br>KR 20040005622 A<br>US 2004095185 A1 | 12-02-2004<br>16-01-2004<br>20-05-2004 |
| WO 2005039251 A | 28-04-2005 | KEINE | |
| US 2005231133 A1 | 20-10-2005 | KEINE | |
| US 2005189822 A1 | 01-09-2005 | DE 102005005539 A1<br>JP 2005224087 A | 08-09-2005<br>18-08-2005 |

EPO FORM P0461

Für nähere Einzelheiten zu diesem Anhang : siehe Amtsblatt des Europäischen Patentamts, Nr.12/82